(19) Europäisches Patentamt
European Patent Office
Office européen des brevets

(11) Veröffentlichungsnummer: **0 278 289 A2**

(12) # EUROPÄISCHE PATENTANMELDUNG

(21) Anmeldenummer: **88100926.0**

(22) Anmeldetag: **22.01.88**

(51) Int. Cl.4: **H04Q 1/20** , H04M 3/22

(30) Priorität: **12.02.87 DE 3704369**

(43) Veröffentlichungstag der Anmeldung: **17.08.88 Patentblatt 88/33**

(84) Benannte Vertragsstaaten: **AT CH FR GB IT LI**

(71) Anmelder: **ANT Nachrichtentechnik GmbH**
**Gerberstrasse 33**
**D-7150 Backnang(DE)**

(72) Erfinder: **Koeck, Klaus, Dipl.-Ing.**
**Dunantstrasse 2**
**D-7150 Backnang(DE)**

(54) **Prüfeinrichtung für ein Breitband-Vermittlungsnetz.**

(57) Prüfeinrichtung für Breitband-Vermittlungsnetz mit Breitband-Durchgangs-Vermittlungsstellen und sternförmig daran angeschlossenen Breitband-Anschluß-Vermittlungsstellen, an welchen Teilnehmer angeschlossen sind, mit zyklischer Leitungsprüfung und Bedienplätzen, dadurch gekennzeichnet, daß bei jeder Vermittlungsstelle ein Prüfsender und ein ihm zugeordneter Prüfempfänger angeordnet sind, daß der Prüfsender ein Testsignal aussendet, welches der Prüfempfänger empfängt, daß das Testsignal über das Koppelnetzwerk der Vermittlungsstelle auf die Leitungen eingespeist wird, daß die zyklische Leitungsprüfung ohne Zeichengabe erfolgt, und daß das Testsignal nach Leitungsschleifendurchlauf über das Koppelnetzwerk der Breitband-Vermittlungsstelle zum Prüfempfänger ausgekoppelt wird.

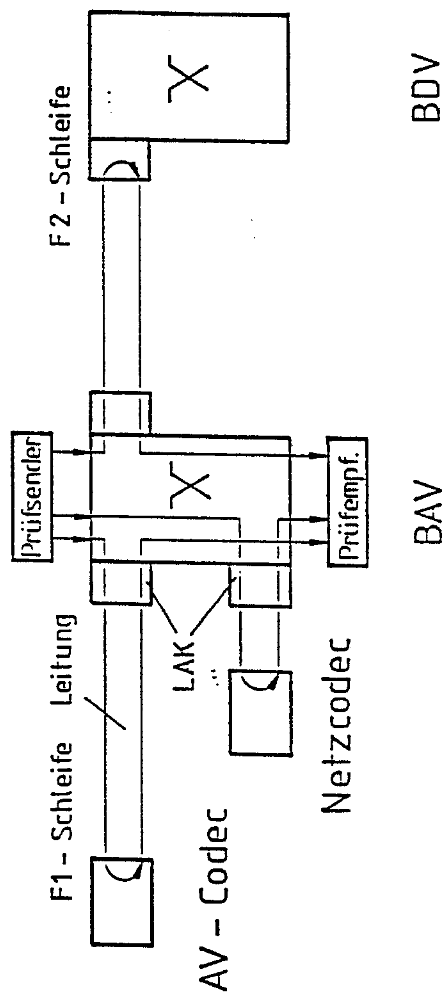


Fig. 1

EP 0 278 289 A2

# Prüfeinrichtung für ein Breitband-Vermittlungsnetz

Die Erfindung bezieht sich auf eine Prüfeinrichtung für ein Breitband-Vermittlungsnetz gemäß Oberbegriff des Anspruchs 1.

Eine solche Prüfeinrichtung ist geeignet, insbesondere in den Breitband-Vermittlungsstellen des zukünftigen Breitband-Vorläufernetzes der Deutschen Bundespost eingesetzt zu werden. Gemäß den Gestaltungsvorschriften für die Breitband-Vermittlungsstellen im Breitband-Vorläufernetz, FTZ 141 TR1, dienen die Breitband-Vermittlungsstellen des Breitband-Vorläufernetzes zur Durchschaltung von 140-MBit/s-Leitungen für Selbstwahlverbindungen und zur Durchschaltung von 2-MBit/s-und 140-MBit/s-Leitungen für Reservierungsverbindungen, wobei das Breitband-Vorläufernetz zunächst ein zweistufiges Netz mit drei Breitband-Durchgangs-Vermittlungsstellen in der oberen Netzebene und dreizehn Anschluß-Vermittlungsstellen in der unteren Netzebene darstellt und die Verbindungsleitungen des Breitband-Vorläufernetzes für Selbstwahl- und Reservierungsverbindungen in getrennten Bündeln geführt sind.

Aufgabe der vorliegenden Erfindung war es, eine Prüfeinrichtung der eingangs genannten Art anzugeben, die in der Lage ist, ein neues komplexes Breitband-Vermittlungsnetz, insbesondere das zukünftige Breitband-Vorläufernetz der Deutschen Bundespost, nach modernen Gesichtspunkten in technisch günstiger und wirtschaftlich aufwandsarmer Weise zu prüfen.

Die Lösung dieser Aufgabe erfolgt durch die kennzeichnenden Merkmale des Anspruchs 1.

Die erfindungsgemäße Prüfeinrichtung hat die Vorteile, daß sie die an sie gestellten Prüfaufgaben hervorragend bewältigen kann und der Aufwand hierfür nicht allzu groß ist.

Vorteilhafte Ausgestaltungen der erfindungsgemäßen Prüfeinrichtung ergeben sich durch die Unteransprüche.

Es folgt nun eine detaillierte Beschreibung der erfindungsgemäßen Prüfeinrichtung und zwar an einem Ausführungsbeispiel für das von der Deutschen Bundespost vorgesehene Breitband-Vorläufernetz BVN. Es wird dabei von den folgenden Anforderungen an die Prüfeinrichtungen in den einzelnen Breitband-Vermittlungsstellen ausgegangen.

1. Die Bitrate und der Rahmenaufbau des Prüfsignals entsprechen dem Anschlußstellen-Audio-Video-Codec 140 (AV-Codec 140).

2. Im Übertragungsrahmen werden die B-Plätze durch das Prüfsignal belegt, die Nettobitrate ist dabei 135 MBit/s.

3. Die Bitplätze 9 und 10 des Hilfskanals H2 werden mit binär 0 belegt, wenn beim AV-Codec die Leitungsschleife F1 gebildet werden soll.

4. Die gemessene Bitfehlerhäufigkeit wird in dem Meßbereich von $10^{-3}$ bis $10^{-9}$ angegeben, wobei die Meßzeit etwa von 0,1 sec. bis zu 10 min. reicht.

5. Die individuelle Kennung ermöglicht die Zuordnung eines im Netz durchgeschalteten Prüfsignals zu einer ganz bestimmten Breitband-Vermittlungsstelle BBV.

6. Die Prüfeinrichtung in den Breitband-Vermittlungsstellen verfügt über einen gesonderten 2-MBit/s-Prüfteil und einen gesonderten 140-MBits-Prüfteil.

Weiterhin wird von den folgenden Anforderungen an die Breitband-Vermittlungsstellen ausgegangen.

1. Die Prüfeinrichtung wird auf das 2,048-MHz-Taktnormal im Breitband-Vorläufernetz BVN synchronisiert.

2. Das Prüfsignal ist auf eine bestimmte Leitung manuell zuschaltbar mittels Eingabe eines Kommandos am Bedienplatz der Breitband-Vermittlungsstelle.

3. Das Prüfsignal ist automatisch zuschaltbar auf nicht belegte Leitungen in einer zyklischen Abfolge, wobei jeweils nur eine Leitung zu einem Zeitpunkt, ausgehend von einer Breitband-Vermittlungsstelle, prüfbar ist, wenn dort lediglich ein Prüfempfänger vorhanden ist.

Es folgt nun die Beschreibung anhand der Figuren, welche sich ebenfalls auf das Ausführungsbeispiel für das geplante Breitband-Vorläufernetz BVN der Deutschen Bundespost beziehen.

Figur 1 zeigt die Leitungsprüfung im Breitband-Anschluß-Vermittlungsbereich, also der unteren Stufe des zweistufigen Netzes.

Die Figur 2 zeigt die entsprechende Leitungsprüfung im Breitband-Durchschalte-Vermittlungsbereich BDV.

In der Figur 3 ist ein Blockschaltbild für eine Leitungsanpassung an das Koppelfeld für 2-MBit/s-Kanäle (LAK 2) gezeichnet.

In der Figur 4 ist ein Blockschaltbild für eine Leitungsanpassungseinheit an das Koppelfeld für 140-MBit/s-Kanäle (LAK 140) gezeichnet.

Der Figur 5 ist die Koppelnetzprüfung zu entnehmen.

Schließlich zeigt die Figur 6 die Leitungsprüfung mit manueller Steuerung und die Figur 7 ein Blockschaltbild der zentralen Testeinrichtung.

Die Figur 1 zeigt in der Mitte eine Breitband-Anschluß-Vermittlungsstelle BAV mit Koppelnetzwerk, Prüfsender, zugeordnetem Prüfempfänger und Leitungs-Anpassungseinheiten LAK für Leitungen zum Teilnehmer, F1, und zur übergeordneten, zugeordneten Breitband-Durchgangs-Vermittlung BDV, rechts im Bild, über F2-Leitungen, sowie zu einem Netzcodec, ebenfalls über eine F1-Leitung. Alle Leitungs-Anpassungseinheiten LAK der Breitband-Anschluß-Vermittlungsstelle BAV sind zunächst auf "Nicht-F2-Schleife" voreingestellt, d.h. es ist keine Prüfschleife projektiert. Durch Nullsetzen der beiden Bits im H2-Kanal des Übertragungsrahmens des Prüfsignals wird die F1-Schleife im AV-Codec beim Teilnehmer und im Netzcodec automatisch geschlossen.

Die den Verbindungsleitungen zugeordneten Leitungs-Anpassungseinheiten LAK der Breitband-Durchgangs-Vermittlungen BDV sind in "F2-Schleife" projektiert. Damit wird das Prüfsignal ohne weiteres Zutun der Breitband-Durchgangs-Vermittlung bzw. ohne Signalisierungsaustausch zwischen Breitband-Anschluß-Vermittlungsstelle BAV und Breitband-Durchgangs-Vermittlungsstelle BDV bei der Breitband-Durchgangs-Vermittlungsstelle BDV geschleift.

Der Figur 2 sind im Blockschaltbild die geplanten drei Breitband-Durchgangs-Vermittlungsstellen BDV Hannover, Düsseldorf und Frankfurt zu entnehmen. Jede Breitband-Durchgangs-Vermittlungsstelle BDV weist ein Koppelfeld, einen Prüfsender und einen ihm zugeordneten Prüfempfänger, Leitungs-Anpassungseinheiten LAK zur Ankoppelung an die Verbindungsleitungen F2 auf. Durch eine entsprechende F2-Schleifen-Projektierung wird bei jeder Breitband-Durchgangs-Vermittlungsstelle BDV die Leitungen zwischen dieser und einer benachbarten Breitband-Durchgangs-Vermittlungsstelle geprüft derart, daß jeweils bei einer Verbindung nur bei einer Breitband-Durchgangs-Vermittlung BDV die F2-Schleife projektiert ist. Somit ist auch hier. keine weitere Verabredung zwischen den Breitband-Durchgangs-Vermittlungsstellen BDV erforderlich. Der AV-Codecteil des Netzcodecs wird wie bei einer Breitband-Anschluß-Vermittlungsstelle BAV geprüft.

Wie in Figur 1 wird ein vom Prüfsender ausgesandtes Prüfsignal über das Koppelfeld der entsprechenden Breitband-Durchgangs-Vermittlungsstelle, z.B. Düsseldorf, eine Leitungs-Anpassungseinheit LAK auf eine Leitung beispielsweise zur BDV Hannover gegeben, dort in der dortigen Leitungs-Anpassungseinheit LAK in einer F2-Schleife geschleift, das reflektierte Signal gelangt auf der Verbindungsleitung zurück zur Leitungs-Anpassungseinheit LAK der BDV Düsseldorf und wird über das Koppelfeld zum zugeordneten Prüfempfänger aufgekoppelt. Durch diese Hintereinanderschaltung ergeben sich jeweils Hinweise bei auftretenden Defekten.

Die Figuren 3 und 4 geben die Leitungs-Anpassungseinheiten an das Koppelfeld LAK 2 und LAK 140 wieder. Die Funktionen beider Baugruppen sind ähnlich. Sie werden am Beispiel der LAK 140 kurz beschrieben.

Die F2-Schnittstelle ist entsprechend CCITT G.703,9 realisiert und erfüllt die Forderungen bezüglich Blitzschutz, Scheinwiderstand, adaptive Leitungsentzerrung, Jitterverträglichkeit, Jitterunterdrückung, Ausgangspulsformung und geringem Eigenjitter.

Die Amplitudenregenerierung des F2-an-Signals erfolgt im Leitungsentzerrer. Das CMI-codierte Signal wird erst nach der Durchschaltung durch das Koppelfeld binär gewandelt und mittels eleastischem Speicher und schmalbandiger Phasenregelschleife (PLL) taktregeneriert.

Die Baugruppe kann aus dem Betriebsmodus "Durchschaltung des Nutzsignals von F2an nach Koppelfeld und vom Koppelfeld nach F2ab getrennt nach Richtung F2ab in den Modus "Leitungsschleife" (auch F2-Schleife genannt) oder "Ersatzsignal" über die Funktionssignale B (FBi) und nach Richtung Koppelfeld in den Modus "Koppelfeldschleife" oder "Prüfsignal" über die Funktionssignale A (FAi) geschaltet werden.

Das Nutzsignal wird auf F2-Pegel (AS1), AIS (M1), Koppelfeld-Pegel (M3) und Taktsynchronisation (AS2) überwacht. Die Alarme bzw. Meldungen gelangen zur LAK-Steuerung, die bei fehlendem Signal oder bei der AIS-Meldung die in den Gestaltungsvorschriften geforderten Ersatzschaltungen veranlaßt. Um einen Signaleinbruch an F2ab zu vermeiden, erfolgt die Ersatzsignalschaltung Richtung F2ab mittels Gatterlogik bei fehlendem Koppelfeld-Pegel (M3) oder bei erkanntem "lokalem" Prüfsignal (M2) im Betriebsmodus Durchschaltung.

Die Meldungen und Alarme, wie auch die Betriebsmodi werden an der Baugruppe mit LED's direkt angezeigt.

Es wurde dargestellt, daß bei jeder Durchschaltung auf Koppelfeld-Pegel geprüft wird.

Bei fehlendem Koppelfeld-Pegel ergibt sich ein Hinweis auf einen Defekt im Koppelfeld-Bereich, nämlich Steuerung und/oder Signalweg und/oder im Bereich der Leitungs-Anpassungseinheit LAK. Diese Aussage gilt sowohl für 2-MBit/s-als auch für 140-MBit/s-Kanäle.

Durch den zyklischen Leitungstest werden neben der zu prüfenden Leitung die den Leitungs-Anpassungseinheiten LAK zugeordneten Eingangs-und Ausgangskoppelpunkte, die dazwischenliegenden Koppelpunkte und die Signalwege in den Leitungs-Anpassungseinheiten LAK durch die Aussage der Bitfehlerhäufigkeit bezüglich der Funktionsfähigkeit geprüft. Eine erhöhte Bitfehlerrate ergibt einen Hinweis auf Defekte in der Hintereinanderschaltung Koppelfeld, LAK, Leitung, Codec oder LAK (Schleife), Leitung, LAK, Koppelfeld. Dieses Verfahren ist die "indirekte Prüfung" des Koppelfeldes.

Im folgenden wird die direkte Prüfung beschrieben.

Fehler, die bei der indirekten Prüfung auftreten, veranlassen eine gezielte Prüfung im Koppelfeld- und Leitungs-Anpassungseinheits-Bereich, um den Fehlerort zu bestimmen.

Für die direkte Prüfung des Koppelnetzes wird die für die Leitungsprüfung vorgesehene Einrichtung ebenfalls verwendet. In Figur 5 ist als Ausführungsbeispiel für ein Koppelfeld ein dreistufiges Koppelfeld gezeichnet, wobei jede Stufe aus 16 Koppelfeld-Karten mit 16 Eingängen und 16 Ausgängen besteht. Jede Eingangs-Koppelfeldkarte der 1. Stufe und jede Ausgangs-Koppelfeldkarte der 3. Stufe ist über eine Signalleitung mit der Prüfeinrichtung verbunden. Damit können alle Zwischenverbindungen der 1. und 2. Stufe und 2. und 3. Stufe, sowie sämtliche Koppelpunkte der 2. Stufe ohne Zuhilfenahme der Leitungs-Anpassungseinheiten getestet werden. Diese Prüfung ist vorteilhafterweise als zyklische Prüfung vorgesehen und kann mit dem zyklischen Leitungstest kombiniert werden. Damit ein defekter Eingangs-oder Ausgangs-Koppelpunkt gefunden werden kann, ist eine Schleifung des Prüfsignals in der Leitungs-Anpassungseinheit LAK vorgesehen, (s. Koppelfeldschleife Figuren 3, 4 und 5).

Durch Aktivierung des Prüfsenders und Prüfempfängers einmal auf der im Fehlerbereich liegenden Leitungs-Anpassungseinheit und zum anderen einer wieteren nicht im Fehlerbereich liegenden Leitungs-Anpassungseinheit ist die Eingrenzung des Fehlers auf den Eingangs-oder Ausgangskoppelpunkt möglich. Dieses Verfahren ist sowohl für 2-MBit/s-als auch für 140-MBit/s-Kanäle vorgesehen. Wenn bei dieser Prüfung kein Defekt im Koppelfeldbereich gemeldet wird, bleiben beim Leitungstest als mögliche Fehlerquellen die durchgeschalteten Signalwege der sendenden bzw. empfangenden Leitungs-Anpassungseinheiten LAK, die Leitung oder die schleifenbildende Leitungs-Anpassungseinheit LAK bzw. der schleifenbildende Anschluß-Vermittlungs-AV-Codec übrig. Das Ergebnis der Prüfanalyse wird dem Betriebsplatz mitgeteilt. Eine weitere Fehlereingrenzung geschieht durch Überprüfung der Signale an den Prüfbuchsen der Leitungs-Anpassungseinheiten, nämlich F2 an, F2 ab, KF an, KF ab, und an den Prüfbuchsen eine Ersatzschaltung der Leitung am Verteiler.

Dadurch, daß verzichtet wird, Prüfsignale von den Breitband-Anschluß-Vermittlungsstellen BAV nicht über 2 Breitband-Durchgangs-Vermittlungen BDV zu führen, werden die bei den Breitband-Durchgangs-Vermittlungen BDV auf F2-Schleife projektierten Leitungs-Anpassungseinheiten LAK niemals im durchgeschalteten Zustand geprüft.

Diese Einschränkung gilt entsprechend auch im Bereich der Breitband-Durchgangs-Vermittlungen BDV. Dies ist jedoch nicht nachteilig, da bei der F2-Schleifenbildung die wichtigsten analogen Funktionen der Leitungs-Anpassungseinheit LAK, nämlich Leitungsentzerrung, Taktableitung, Ausgangsstufe usw. bereits getestet werden, s. hierzu Figuren 3 und 4.

Figur 6 zeigt eine weitere Möglichkeit zur Leitungsprüfung, wobei unter Absprache zwischen den Bedienplätzen zweier Vermittlungsstellen, hier einer Breitband-Anschluß-Vermittlungsstelle BAV und einer Breitband-Durchgangs-Vermittlungsstelle BDV, der Test ausgehend von einer Breitband-Anschluß-Vermittlungsstelle BAV über bei der Breitband-Durchgangs-Vermittlungsstelle BDV durchgeschaltete Leitungs-Anpassungseinheiten LAK erfolgt und wobei das Prüfsignal in Hin-und Rückrichtung einer Leitung übertragen wird.

Die Figur 6 zeigt ein Blockschaltbild für eine zentrale Prüfeinrichtung mit den einzelnen Baugruppen (s. eingekreiste Ziffern)

Baugruppe 1: Prüfsender für 140-MBit/s-Kanäle,

Baugruppe 2: Prüfempfänger für 140-MBit/s-Kanäle,

Baugruppe 3: Prüfsender/-empfänger für 2-MBit/s-Kanäle,

Baugruppe 4: Testauswertung und Signalquellen für den 140-MBit/s-Kanal

Baugruppe 5: Prüfsender-Verteiler und

Baugruppe 6: Prüfempfangs-Signalumschalter.

Die Testsignalquellen der beiden Prüfsender werden an ein Taktnormal T3 von 2,048 MHz angebunden. Der 139,264-MHz-Takt wird mittels Phasenregelschleife aus diesem T3-Takt gewonnen. Beide Prüfsignale werden in einem Scrambler erzeugt. Im Falle der 140-MBit/s-Signal-Aufbereitung wird der AV-Codec-140-Rahmen gebildet. Das Prüfsignal belegt die Bildkanäle B dieses Rahmens. Die Bitplätze 9 und 10 des Hilfskanals werden mit binär 0 besetzt, damit im AV-Codec bzw. in der Teilnehmer-Anschlußeinheit die F1-Leitungsschleife geschaltet wird. Im Prüfsender-Verteiler 5 wird entweder das 2-MBit/s-oder das 140-MBit/s-Prüfsignal auf eine der zum Koppelfeld abgehenden Leitung 1 bis 16 oder auf die Eigentest-Schleife geschaltet. Der korrespondierende Eingang am Prüfsignal-Empfangsschalter 6 wird in analoger Weise entweder zum 2-MBit/s-oder zum 140-MBit/s-Empfänger geschaltet.

Die Schalter der Baugruppen 5 und 6 werden synchron über die von der Teststeuerung kommenden Auswahlsignale betätigt.

In den jeweiligen Testempfängern 2 bzw. 3 werden die ankommenden Signale in einem Descrambler entwürfelt. Die auf der Prüfstrecke verfälschten Bits werden in einem Fehlerzähler aufsummiert.

Im folgenden werden einige Bemerkungen zur Programmierung der Auswertung gegeben.
Mittels Zeitfenster-Technik und Ergebnisabfrage durch die Teststeuerung können Bit-Fehlerhäufigkeiten im Bereich $10^{-3}$ bis $10^{-9}$ bei 140-MBit/s bzw. bis zu $10^{-7}$ bei 2-MBit/s berechnet werden. Die obere Schranke von $10^{-9}$ bzw. $10^{-7}$ wird durch die maximale Zeitfensterdauer von etwa 10 min. vorgegeben.
Anstelle von exakten Bit-Fehlerraten werden die gemessenen Fehlerbereiche angegeben, wobei folgende Ausgaben möglich sind.
- Kein Fehler während der Meßdauer von x sec.
- Bit-Fehlerhäufigkeit < $10^{-9}$
- Bit-Fehlerhäufigkeit < $10^{-7}$
- Bit-Fehlerhäufigkeit < $10^{-5}$
- Bit-Fehlerhäufigkeit < $10^{-3}$
-Prüfempfänger nicht synchronisiert und
- kein Empfang eines Prüfsignals.

Die Teststeuerung ist über einen primären und einen redundanten Meldebus Zentralzweig A und B mit der Steuerung der Breitband-Vermittlung, dem Netzwerk-Rechner NWR verbunden, von dem sie zur Überprüfung des Koppelfeldes interne Testaufträge erhält und aufgerufen wird.
Externe Aufträge zur Leitungsprüfung werden bei manueller Steuerung durch Eingabe am Betriebsplatz oder über die Zeichengabe von einem Zentralen Reservierungsplatz ZRP ausgelöst.
Liegen keine manuelle Eingabe und keine Anforderung durch den Zentralen Reservierungsplatz ZRP vor, wird von der Steuerung der Breitband-Vermittlung in zyklischer Abfolge der Test nicht belegter und damit für die Prüfung freigegebener Leitungen angelassen. In dieser zyklischen Abfolge sind Pausen eingebaut, während der der Netzwerk-Rechner seinerseits Zugriff auf die Testeinrichtung zwecks Koppelfeldtest bekommt.

Zu dieser Koppelnetz-Prüfung ist noch Ergänzendes anzubringen, und es wird nochmals auf die Figur 5 verwiesen. Hier ist gut zu erkennen, daß alle 256 Querwege zwischen der 1. und 2. Stufe und zwischen der 2. und 3. Stufe sowie alle Koppelpunkte der 2. Stufe von dem zyklisch ablaufenden Koppelfeld-Test erfaßt werden. Die Prüfstrategie ermöglicht es, in kurzen Abständen Global-Aussagen über die einzelne Leiterkarte und in größeren Abständen Aussagen über den einzelnen Koppelpunkt zu machen. Bei der Leitungsprüfung werden die Koppelfeld-Eingangs-und -Ausgangsstufen sowie die Verbindungen zu den Leitungs-Anpassungseinheiten LAK einschließlich derselben mit in die Prüfung einbezogen. Das Fehlen des Koppelfeld-Pegels im Betriebsmodus "Durchschaltung" weist auf einen aktuellen Fehlerfall hin und veranlaßt die Fehlersuche außerhalb des zyklischen Ablaufs.
Mittels eines Einfach-Prüfsenders und -empfängers sowie Schließmöglichkeit einer Koppelfeld-Schleife auf einer Leitungs-Anpassungseinheit LAK können Störungen im Eingangs-und Ausgangsbereich des Koppelnetzes lokalisiert werden. Die Ergebnisse der internen Tests werden in Gut-und Störungsmeldungen mit genauer Fehlerortsangabe umgesetzt und dem Betriebsplatz angezeigt.

## Ansprüche

1. Prüfeinrichtung für zwei-oder mehrstufiges Breitband-Vermittlungsnetz (BVN), in welchem Schmal-und Breitband-Leitungen für Selbstwahl-und Reservierungsverbindungen in Breitband-Vermittlungsstellen (BBV) durchgeschaltet werden, mit Breitband-Anschluß-Vermittlungsstellen (BAV), an welchen Teilnehmer über Anschlußleitungen angeschlossen sind, mit Breitband-Durchgangs-Vermittlungsstellen (BDV), die untereinander über eine Anzahl Schmal-und Breitband-Kanäle und die jeweils mit einer Gruppe von Breitband-Anschluß-Vermittlungsstellen (BAV) sternförmig über Schmalband-und Breitband-Verbindungsleitungen verbunden sind, mit einer zyklischen Leitungsprüfung, mit einem oder mehreren Bedienplätzen, über die mittels Kommandos die Bit-Fehlerhäufigkeit einzelner auswählbarer Leitungen geprüft und Testverbindungen hergestellt werden, mit Mitteln zur Erkennung und Lokalisierung von Fehlern im Koppelnetzwerk der Breitband-Vermittlungsstelle (BBV), dadurch gekennzeichnet, daß jeweils bei einer Breitband-Vermittlungsstelle (BBV) ein Prüfsender und ein ihm zugeordneter Prüfempfänger angeordnet sind,
daß der Prüfsender ein Testsignal aussendet, welches der ihm zugeordnete Prüfempfänger empfängt,
daß das Testsignal jeweils über das Koppelnetzwerk der jeweiligen Breitband-Vermittlungsstelle (BBV) auf die Leitungen eingespeist wird,
daß die zyklische Leitungsprüfung ohne Zeichengabe erfolgt, indem das von einem Prüfsender einer Breitband-Anschluß-Vermittlungsstelle (BAV) zum Teilnehmer ausgesandte Testsignal über eine Schleife (F1-Schleife) der zu prüfenden Anschlußleitung beim Teilnehmer reflektiert wird und indem das von einem Prüfsender einer Breitband-Vermittlungsstelle (BBV) zu einer anderen benachbarten Breitband-Vermittlungsstelle (BBV) ausgesandte Testsignal unter Nichtberührung dieser benachbarten oder zugeordneten Breitband-Vermittlungsstelle (BBV) direkt in einer Schleife (F2-Schleife) der zu prüfenden Verbindungsleitung reflektiert wird, und
daß das Testsignal nach Schleifendurchlauf (F1-, F2-Schleife) über das Koppelnetzwerk der eingangs genannten Breitband-Vermittlungsstelle (BBV) dem Prüfsender zugeordneten Prüfempfänger ausgekoppelt wird.

2. Prüfeinrichtung nach Anspruch 1, dadurch gekennzeichnet, daß bestimmte auswählbare Schmalband-oder Breitband-Kanäle in Übertragungspausen auf Schleife (F2-Schleife) voreingestellt werden.

3. Prüfeinrichtung nach Anspruch 2, dadurch gekennzeichnet, daß die Voreinstellung mittels Projektierung erfolgt.

4. Prüfeinrichtung nach einem der vorhergehenden Ansprüche, dadurch gekennzeichnet, daß die Schließung der Schleife (F1-Schleife) beim Teilnehmer durch Steuerbits im Rahmen des Testsignals veranlaßt wird.

5. Prüfeinrichtung nach einem der vorhergehenden Ansprüche, dadurch gekennzeichnet, daß die Verbindungsleitung einer Breitband-Vermittlungsstelle zu einem Netzcodec geprüft wird, indem das Testsignal in einer Schleife im Netzcodec reflektiert wird, wobei die Schließung dieser Schleife durch Steuerbits im Rahmen des Testsignals veranlaßt wird.

6. Prüfeinrichtung nach einem der Ansprüche 4 oder 5, dadurch gekennzeichnet, daß die 2 Steuerbits im H2-Kanal sind.

7. Prüfeinrichtung nach einem der vorhergehenden Ansprüche, dadurch gekennzeichnet, daß zwischen den Leitungen und dem Koppelfeld eine Breitband-Vermittlung (BBV) jeweils eine Leitungs-Anpassungseinheit (LAK) eingefügt ist, durch welche bei jeder Durchschaltung einer Schmalband-oder Breitbandleitung auf ein Kriterium "Koppelfeld-Pegel" geprüft wird, und daß bei fehlendem Koppelfeld-Pegel eine Anzeige und eine Meldung dieses Fehlers mit dem Hinweis auf den Fehlerort erfolgen.

8. Prüfeinrichtung nach einem der vorhergehenden Ansprüche, dadurch gekennzeichnet, daß der Prüfsender jeweils über eine Signalleitung mit mehreren Eingängen des Koppelfeldes und der Prüfempfänger jeweils über eine Signalleitung mit der gleichen Anzahl von Koppelfeld-Ausgängen verbunden sind.

9. Prüfeinrichtung nach Anspruch 8, dadurch gekennzeichnet, daß eine Koppelfeld-Schleife - schaltbar ist, indem ein auswählbarer Koppelfeld-Ausgang mit einem auswählbaren Koppelfeld-Eingang verbunden wird.

10. Prüfeinrichtung nach Anspruch 1, dadurch gekennzeichnet, daß sie neben gemeinsamen Einrichtungen, wie Prüfsender-Verteiler und Signalumschalter, für den Schmalbandkanal und für den Breitbandkanal jeweils einen eigenen Prüfsender und Empfänger aufweist.

11. Prüfeinrichtung nach Anspruch 1, dadurch gekennzeichnet, daß sie eine individuelle Kennung der Breitband-Vermittlungsstelle aussendet und das Prüfergebnis nur bei Empfang der eigenen Stationskennung als gültig erklärt wird.

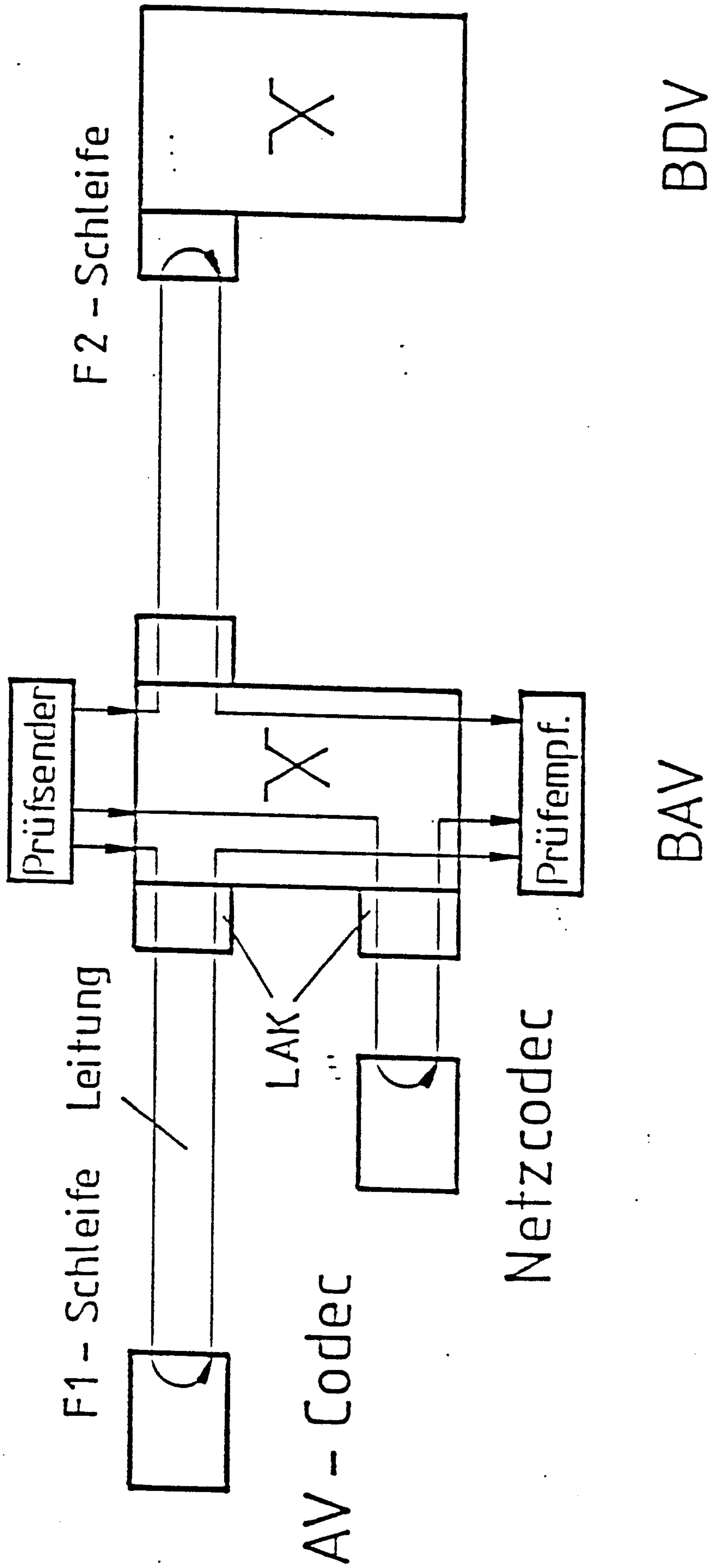

BDV
F 2 - Schleife
Prüfsender
Prüfempf.
BAV
LAK
Leitung
F1 - Schleife
Netzcodec
AV - Codec


Fig. 1

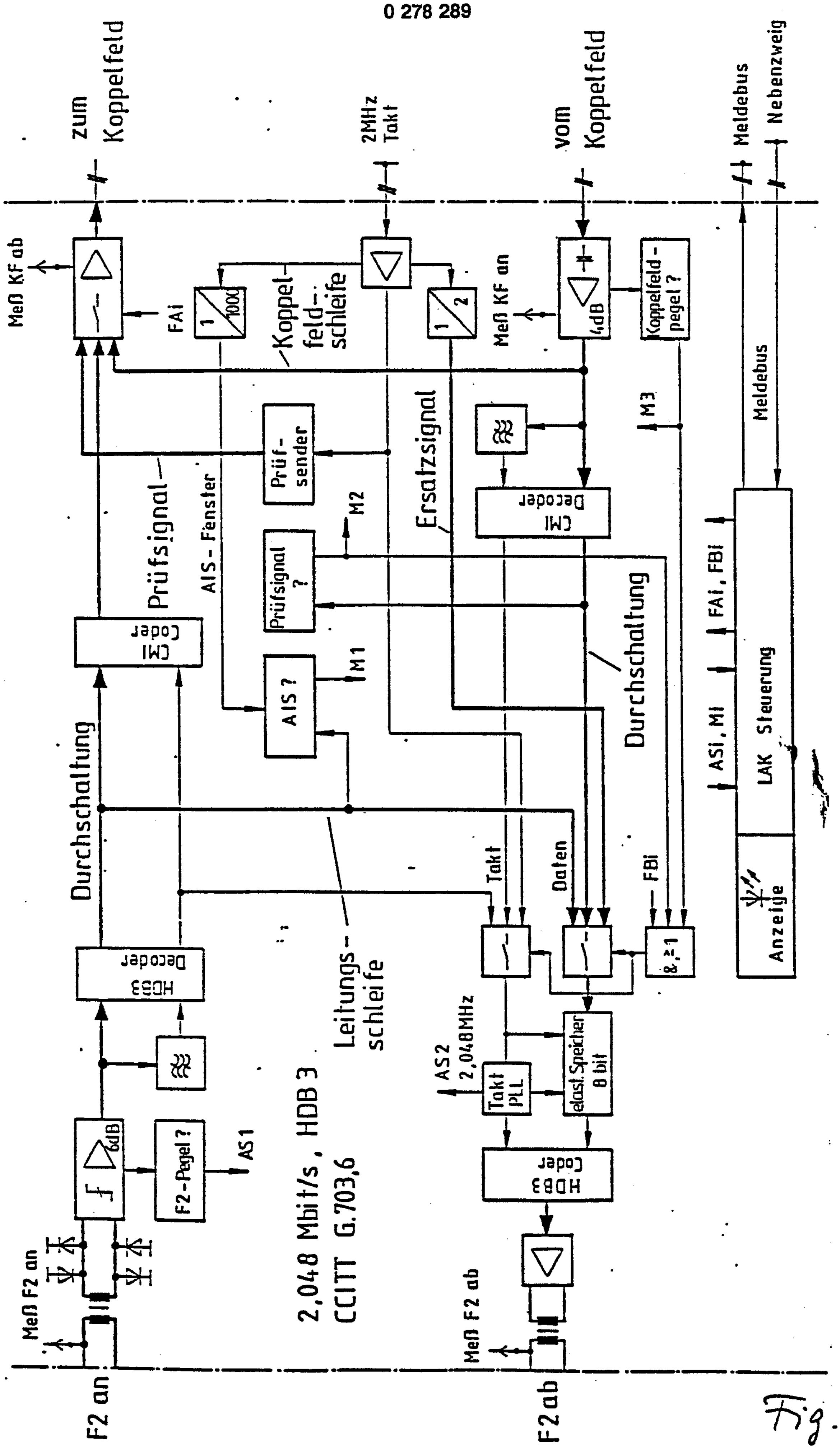
zum Koppelfeld
2MHz Takt
vom Koppelfeld
Meldebus
Nebenzweig
Meß KF ab
FAi
Koppel-feld-schleife
Meß KF an
4dB
Koppelfeld-pegel ?
Prüf-sender
M3
Meldebus
Prüfsignal
AIS - Fenster
Ersatzsignal
CMI Decoder
M2
Prüfsignal ?
CMI Coder
FAi, FBi
AIS ?
M1
Durchschaltung
ASi, MI
LAK Steuerung
Durchschaltung
Takt
Daten
FBi
Anzeige
Leitungs-schleife
HDB3 Decoder
& ≥1
AS2
2,048 MHz
Takt PLL
elast. Speicher 8 bit
6dB
F2-Pegel ?
AS1
2,048 Mbit/s, HDB 3
CCITT G.703,6
HDB3 Coder
Meß F2 an
Meß F2 ab
F2 an
F2 ab

Fig. 3

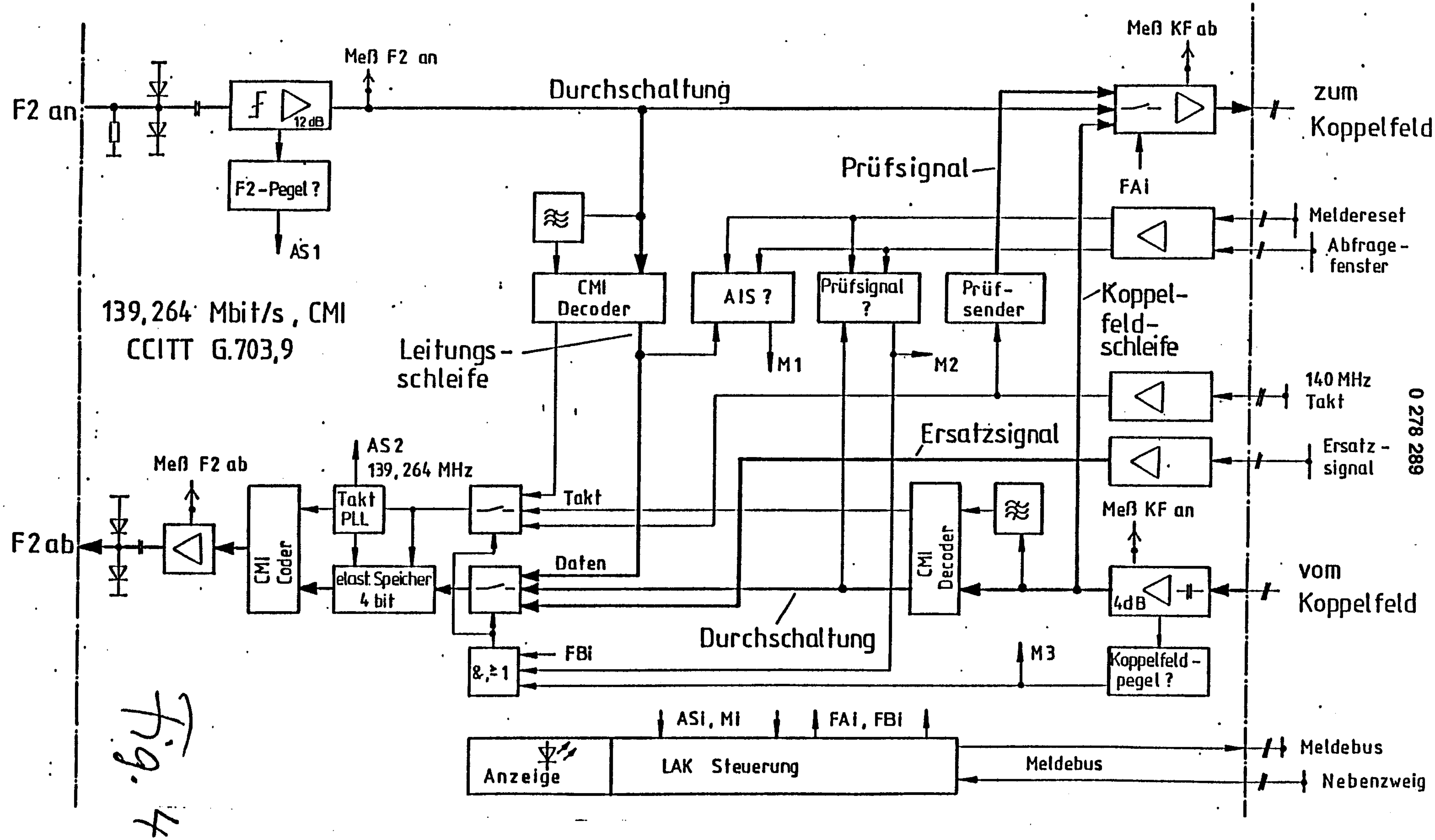

F2 an
Meß F2 an
12 dB
F2-Pegel ?
AS 1
Durchschaltung
139,264 Mbit/s, CMI
CCITT G.703,9
CMI Decoder
Leitungs-schleife
AIS ?
M1
Prüfsignal ?
M2
Prüf-sender
Prüfsignal
Meß KF ab
zum Koppelfeld
FAi
Meldereset
Abfrage-fenster
Koppel-feld-schleife
140 MHz Takt
Ersatzsignal
Ersatz-signal
Meß KF an
vom Koppelfeld
4dB
Koppelfeld-pegel ?
M3
CMI Decoder
Durchschaltung
Takt
Daten
FBi
&, ≥ 1
AS 2
139, 264 MHz
Takt PLL
elast. Speicher 4 bit
CMI Coder
Meß F2 ab
F2 ab
ASi, Mi
FAi, FBi
Anzeige
LAK Steuerung
Meldebus
Meldebus
Nebenzweig


Fig. 4

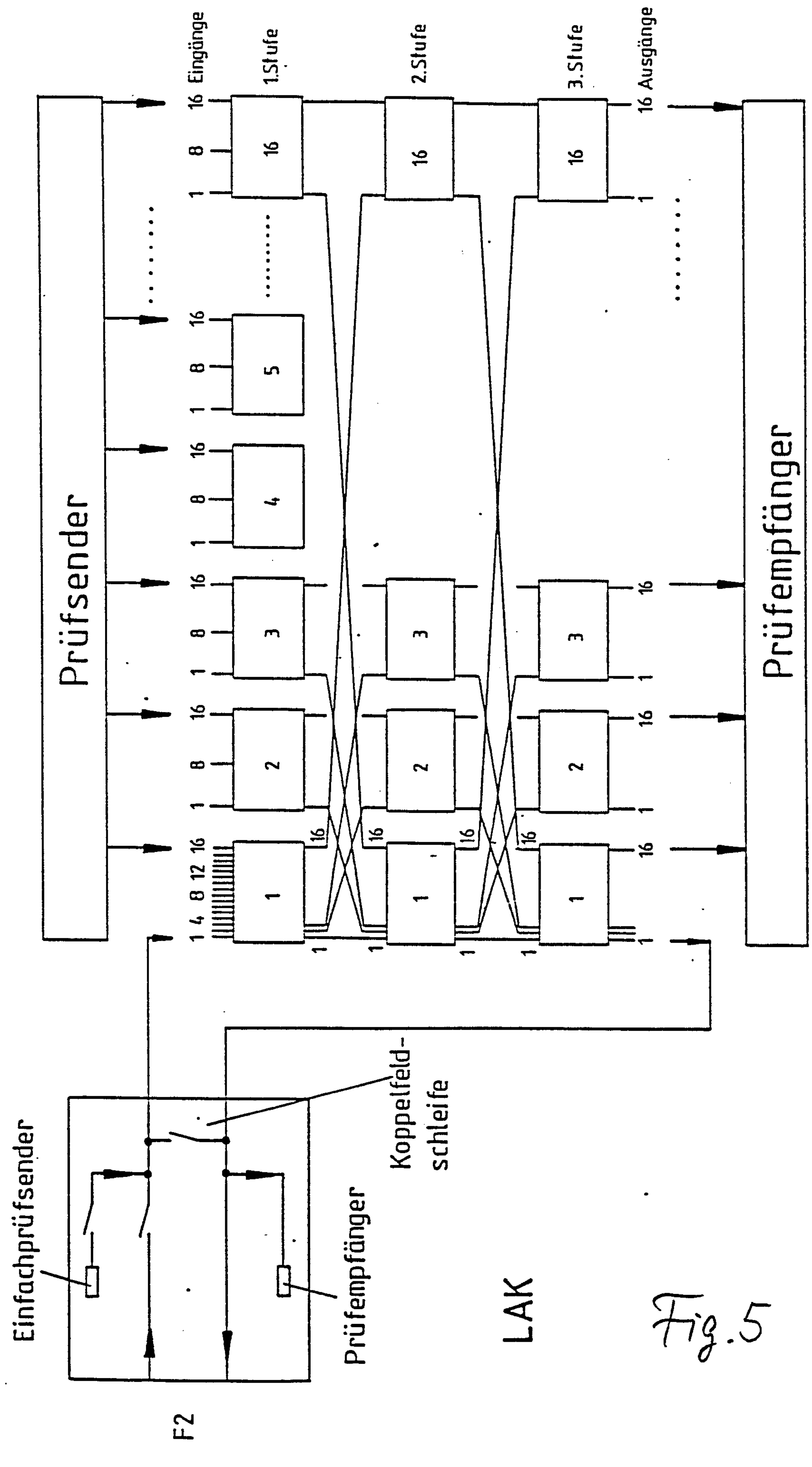

Eingänge
1.Stufe
2.Stufe
3.Stufe
Ausgänge
Prüfsender
Prüfempfänger
Koppelfeld-
schleife
Einfachprüfsender
Prüfempfänger
LAK
F2


Fig.5

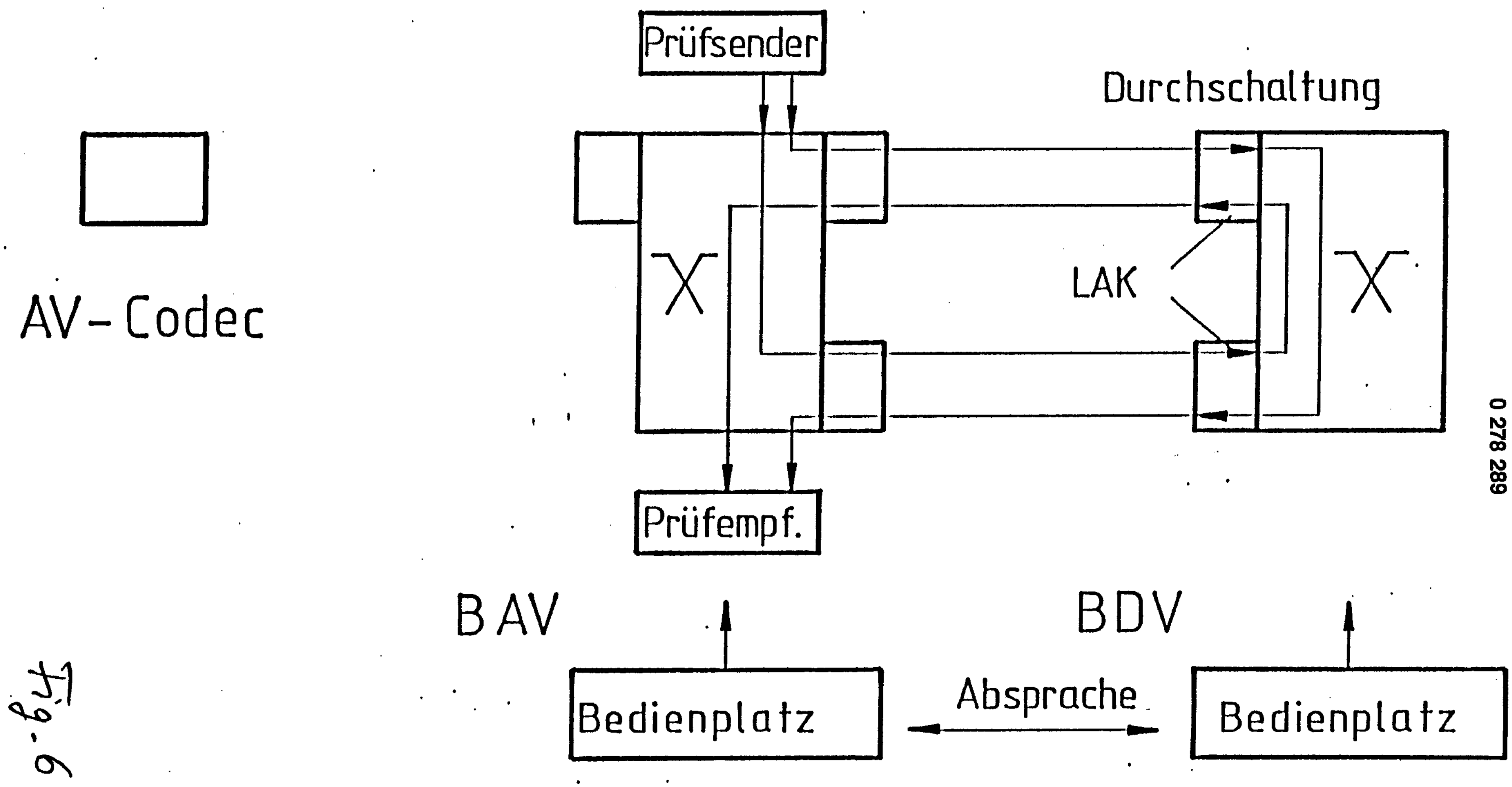

AV-Codec
Prüfsender
Durchschaltung
LAK
Prüfempf.
BAV
BDV
Bedienplatz
Absprache
Bedienplatz


Fig. 6

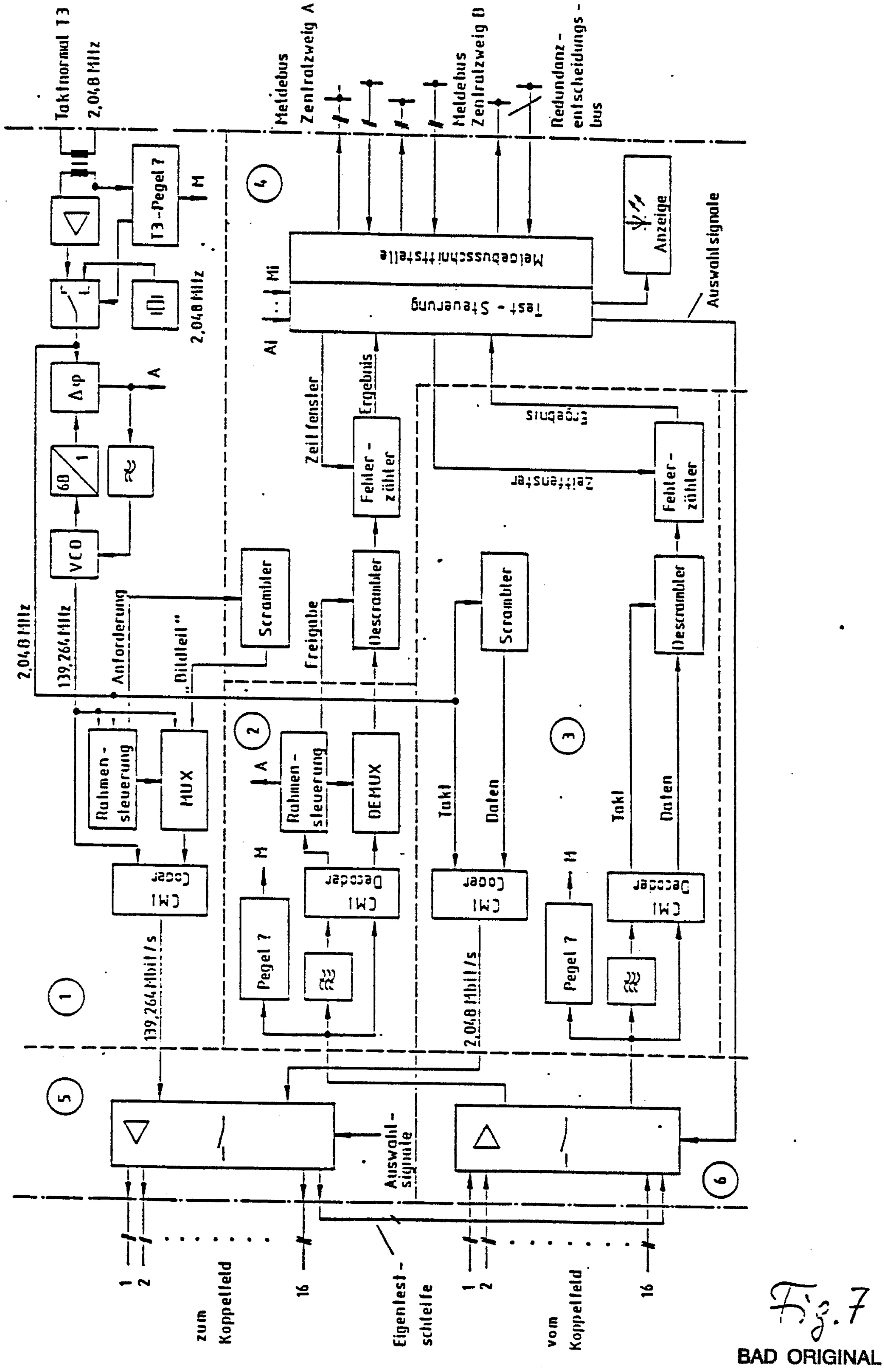


Fig. 7

BAD ORIGINAL